Europäisches Patentamt

European Patent Office

Office européen des brevets

(19)

(11) Publication number: **0 370 388 B1**

## EUROPEAN PATENT SPECIFICATION

(12)

(45) Date of publication of patent specification: **09.03.94**

(51) Int. Cl.⁵: **H02M 5/27**, H02M 7/162

(21) Application number: **89121209.4**

(22) Date of filing: **16.11.89**

(54) **Power converter.**

(30) Priority: **24.11.88 JP 294572/88**

(43) Date of publication of application:
**30.05.90 Bulletin 90/22**

(45) Publication of the grant of the patent:
**09.03.94 Bulletin 94/10**

(84) Designated Contracting States:
**DE FR**

(56) References cited:
**EP-A- 224 198
DE-A- 3 522 872
DE-C- 3 402 954
GB-A- 2 175 758
US-A- 4 329 595**

(73) Proprietor: **HITACHI, LTD.
6, Kanda Surugadai 4-chome
Chiyoda-ku, Tokyo 101(JP)**

(72) Inventor: **Nakata, Kiyoshi
1-1-10, Higashidaira
Tomobe-machi
Nishi Ibaraki-gun Ibaraki 309-17(JP)**
Inventor: **Terunuma, Mutsuhiro
4237-15, Sakado-cho
Mito-shi Ibaraki 310(JP)**
Inventor: **Kimura, Akira
16-2, Aoba-cho
Katsuta-shi Ibaraki 312(JP)**
Inventor: **Nakamura, Kiyoshi
2525-524, Mawatari
Katsuta-shi Ibaraki 312(JP)**
Inventor: **Ishida, Toshihiko
2-3-1, Takasuzu-cho
Hitachi-shi Ibaraki 317(JP)**

(74) Representative: **Patentanwälte Beetz - Timpe -
Siegfried Schmitt-Fumian - Mayr
Steinsdorfstrasse 10
D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 370 388 B1

EP 0 370 388 B1

**Description**

Background of the Invention

The present invention relates to a power converter which converts an alternating current into a direct current via a transformer. More particularly, the invention relates to a power converter of the type of pulse-width modulation adapted to suppressing the increase of the secondary current caused by the field distortion in the transformer.

An ac power conversion system employing a pulse-width modulation (hereinafter referred to as PWM) converter obtains higher efficiency and smaller harmonic waves, and makes it possible to regenerate the electric power, lending itself to a variety of applications.

In the systems of this kind, a transformer is provided in many cases between the source of power and the PWM converter to maintain electric insulation relative to the source of power and to transform the voltage.

In the PWM converter, a so-called phenomenon of field distortion often takes place in which a dc voltage is applied to the winding of a transformer and the magnetic flux in the core is deviated to one polarity. Main causes of the phenomenon of field distortion can be attributed to a voltage drop due to resistance in the lines, transient factors that develop when the load changes suddenly such as when the power source circuit is closed, and separation of the pantograph from the electric line such as when the transformer is mounted on an electric car. When the field distortion phenomenon is generated in the transformer, the core of the transformer is saturated causing the secondary voltage and the reactance to decrease greatly, thus generating large harmonic wave components of low orders in the alternating current and further permitting the transformer to generate large noise.

In the self-excited power converter such as the PWM converter, in particular, the input current changes greatly with a change in the power source voltage or in the ac reactance. Therefore, as the secondary voltage and the reactance decrease due to field distortion in the transformer, the input current to the converter becomes so large that the operation is not continued any more.

Prior art for solving such problems has been disclosed in Japanese Patent Laid-Open No.Sho 53-20525(1978), Japanese Patent Laid-Open No.Sho 62-123963(1987) and Japanese Patent Laid-Open No.Sho 59-13313(1984).

The apparatus disclosed in Japanese Patent Laid-Open No.Sho 53-20525(1978) detects the field distortion on the basis of a difference between the primary current and the secondary current of the transformer and regulates the current that flows into the tertiary winding of the transformer depending upon the quantity of field distortion.

This apparatus, however, is not capable of solving a basic problem in that the apparatus itself is bulky.

According to the apparatus disclosed in Japanese Patent Laid-Open No.Sho 62-123963(1987), dc components in the alternating current produced by a sudden change in the power source voltage or in the control quantity are removed within short periods of time in order to suppress the change in the dc voltage and field distortion in the transformer, to improve power factor, to decrease harmonic waves, to impart sophisticated functions to the apparatus, and to accomplish high degree of precision. This apparatus is equipped with a vector operation circuit which produces amplitude and phase signals of a converter input voltage such that a current that flows through the ac reactor will have a predetermined phase relative to the power source voltage, a dc component detecting circuit for detecting a direct current that flows through the ac reactor, and a dc component compensation circuit which controls the amplitude and phase signals produced from the vector operation circuit based upon the output of the dc component detecting circuit so that the direct current flowing through the ac reactor will become zero. Then, the amplitude and phase instructions of the converter input voltage are produced through the vector operation, and at least either the amplitude instruction or the phase instruction is so operated depending upon the direct current flowing through the ac reactor.

Japanese Patent Laid-Open No.Sho 59-13313(1984) deals with an apparatus designed for a transformer excited by an inverter or for a transformer that has a load consisting of a converter, and wherein second harmonic wave components are picked up from a current that flows into the primary winding of the transformer and the dc output corresponding to the signal is permitted to flow into the additional winding of the transformer in order to suppress iron losses due to dc field distortion and to suppress the exciting current from increasing caused by irregular commutation timings of the switching elements or irregular voltage drops in the forward direction.

This method, however, is not either capable of solving a basic problem in that the apparatus itself becomes bulky.

2

The above prior art disclosed in Japanese Patent Laid-Open No.Sho 62-123963(1987) is effective for the field distortion generated by dc voltage components or dc current components produced by the converter itself and is effective for the field distortion that is generated when a dc voltage is temporarily applied to the primary winding of the transformer such as when the circuit is closed or broken.

However, the above prior art is not capable of eliminating the field distortion when a load device that generates a direct current exists in the same power source (primary side of the transformer) and a dc voltage is continuously applied to the primary winding of the transformer. With this apparatus, when the power source consists of a transformer, the direct current does not flow to the secondary side even when a direct current flows into the primary side and generates field distortion, harmonic wave components of low orders simply generate. Since no dc component to be detected is contained in the secondary current (reactor current), the dc component detecting circuit does not operate and the field distortion is not eliminated. Even if the dc component detector is installed on the primary side to detect a direct current on the primary side, the direct current on the secondary side is not adjusted to cancel the direct current of the primary side. If it is attempted to bring the primary current to zero, the direct current of the secondary side becomes too large, and the field distortion becomes conspicuous.

According to another prior art, the direct current components can be detected on the primary side and the secondary side of the transformer. Inevitably, however, the device for flowing a compensation current to the tertiary winding of the transformer becomes bulky. Referring to Japanese Patent Laid-Open No.Sho 53-20525(1978), furthermore, determination of polarity of the field distortion is not sufficient, and the field distortion rather increases depending upon the polarity of the field distortion. Referring to the apparatus disclosed in Japanese Patent Laid-Open No.Sho 59-13313(1984), it is not obvious how the quantity of field distortion and the polarity are determined, and operation quantity of the compensation circuit is not obvious, either.

Summary of the Invention

An object of the present invention is to provide a power converter which effects the ac/dc conversion by a PWM converter connected via a transformer to the ac power source, wherein the phenomenon of field distortion that occurs when a dc voltage is applied temporarily or continuously to the transformer from the power source side or from the transformer side is prevented in advance.

Another object is to provide a power converter which prevents in advance the phenomenon of field distortion without generating interference among the converters even when a plurality of converters are connected to the secondary side of a transformer.

The phenomenon of field distortion develops in the transformer when dc voltage components are applied to the transformer such that the magnetic flux in the core is deviated toward one polarity. To eliminate this, the condition of field distortion must be reliably detected. The condition of field distortion can be detected most reliably by directly observing the magnetic flux in the core of the transformer, which in practice, however, is quite difficult to realize. It is also possible to detect the product of voltage and time involving, however, this is difficult.

On the other hand, the quantity of field distortion can be easily detected by detecting the sum of dc ampere-turns of the transformer.

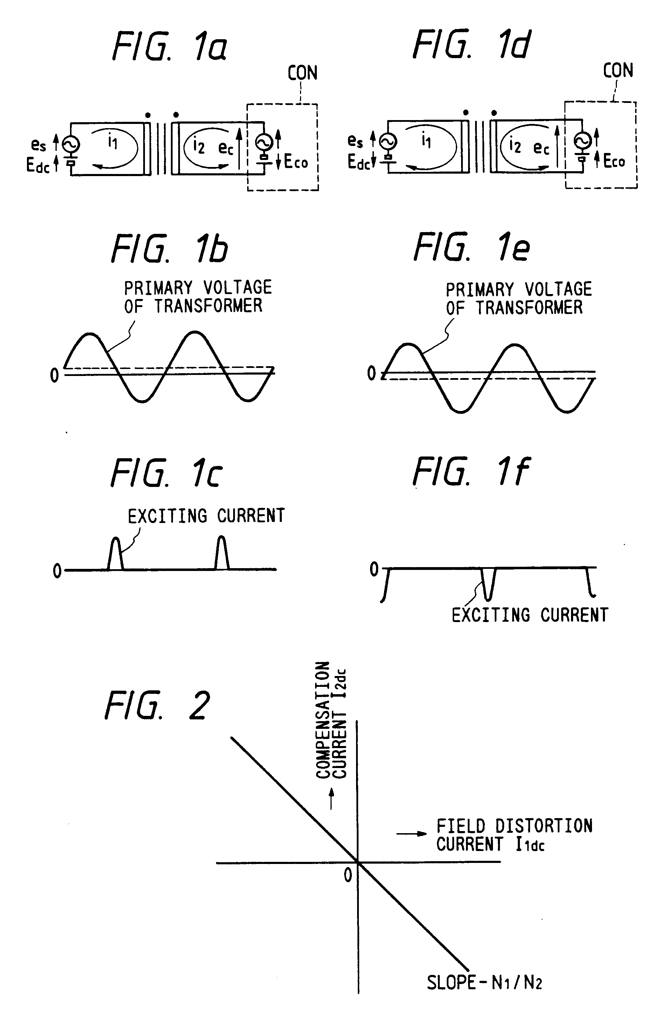

If the polarity of the transformer and positive polarity of the current are as shown in Fig. 1a to 1c, the dc component (referred to as compensation current) $I_{2qp}$ necessary for eliminating the field distortion becomes as shown in Fig. 1a to 1f when a direct current (referred to as field distortion current) $I_{1qp}$ is permitted to flow to the primary side of the transformer. In order to eliminate the field distortion as will be obvious from the drawing, the compensation current $I_{2qp}$ be set to,

$$I_{2qp} = - \frac{N_1}{N_2} I_{1qp} \qquad \cdots (1)$$

This indicates that the field distortion is eliminated when the sum of dc ampere-turns of the transformer becomes zero. The equation (1) holds true irrespective of the load conditions.

Therefore, when the number of turns of the transformer is n, the compensation current should be so set that the sum AT of ampere-turns for the dc component is,

3

$$AT = \sum_{k=1}^{n} NK \cdot Ikdc = 0 \qquad \cdots (2)$$

where,

NK: number of turns of a k-th winding,

Ikdc: dc component in the current of the k-th winding.

When the compensation is to be effected from the j-th winding, the compensation current Ijdc is given by,

$$Ijdc = -\frac{1}{Nj} \sum_{\substack{K=1 \\ (K \neq j)}}^{n} NK \cdot IKdc$$

According to this method, the state of field distortion is reliably detected from whichever winding the field distortion current is supplied, and the field distortion is eliminated.

It is also possible to detect the state of field distortion by detecting even harmonic wave components contained in the primary current or the secondary current.

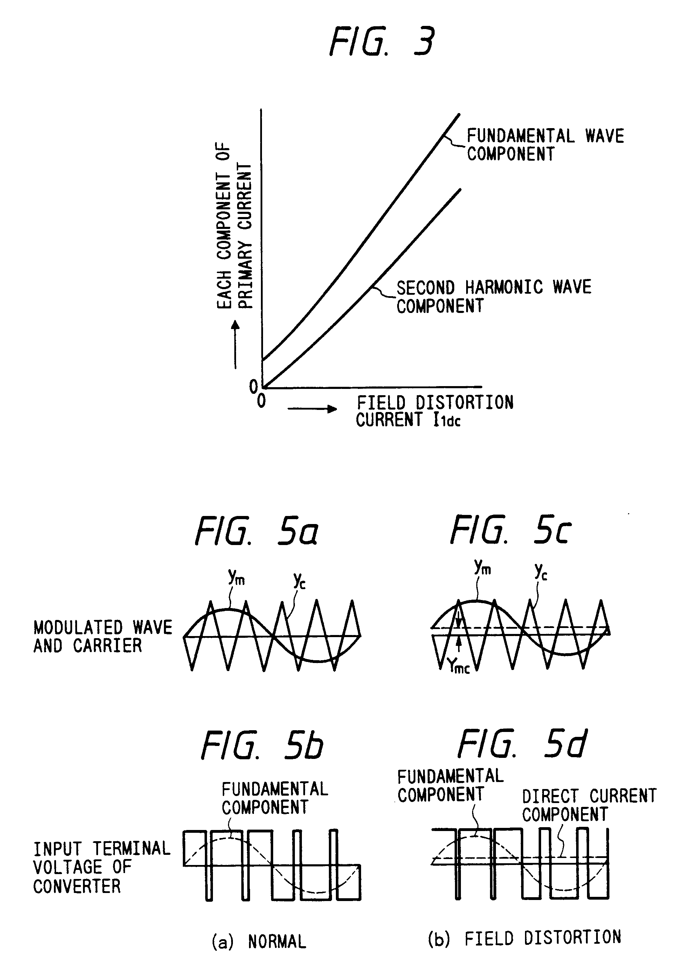

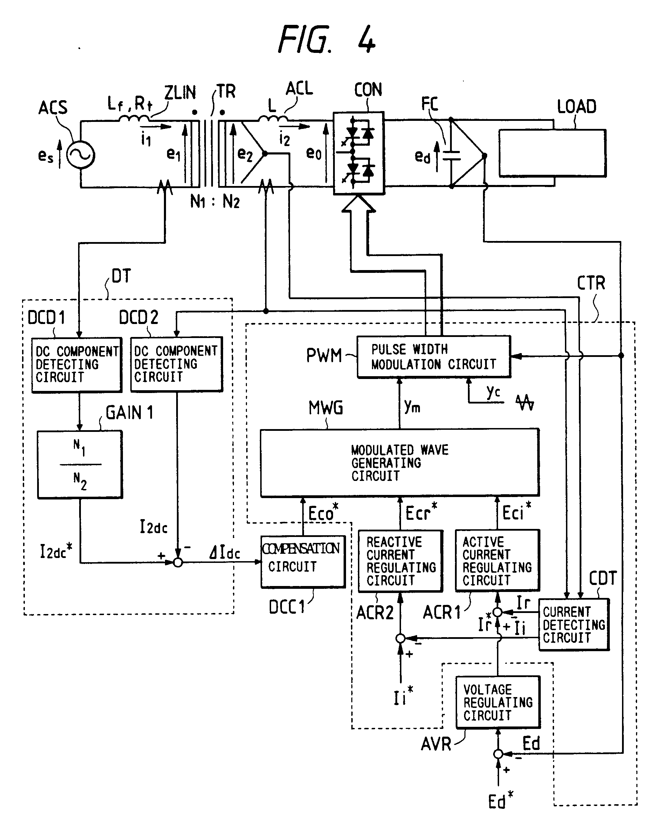

Fig. 3 shows experimentally found relationships of current components contained in the primary current relative to the field distortion current. In Fig. 3, the second harmonic wave component as well as even harmonic wave components increase nearly in proportion to the increase in the field distortion current (Fig. 3 shows the second harmonic wave component only). The even harmonic wave components occur since the current wave forms are not symmetrical on the positive and negative sides being affected by the magnetization characteristics of the core of the transformer. The polarity of even harmonic wave components differs depending upon the direction of the field distortion. By detecting the direction, therefore, the polarity of the field distortion is detected. Thus, the quantity of state of field distortion corresponding to the dc ampere-turns can be detected from the even harmonic wave components of the primary current. As for the secondary current, there also are generated even harmonic wave components due to field distortion. By detecting these components therefore, the quantity of state of field distortion can be detected like the case of the primary current.

The field distortion cannot be prevented in advance even if the thus detected quantity of state of field distortion is supplied into the output winding of the transformer, and some compensation must be applied for this purpose. The means for this purpose must be capable of continuously flowing the dc compensation current even when the quantity of state of field distortion detected by the above method is zero. Without such a compensation means, the compensation quantity becomes zero when the quantity of state of field distortion is zero as a result of compensation, and the state of field distortion is assumed again.

The field distortion is eliminated by means which supply a direct current into the output winding of the transformer as shown in Fig. 1 in response to a compensation signal which is based on a detected signal. As shown in Fig. 1a, for example, when voltage of a sinusoidal wave containing a positive dc voltage Edc is applied to the primary winding of the transformer, the core is magnetized being deviated toward the positive polarity, and whereby an exciting current flows to maintain balance as shown. In this case, a dc voltage Eco is generated on the converter input voltage $e_c$ maintaining the polarity as shown in Fig. 1a, and a direct current of a negative polarity is supplied into the secondary winding such that the dc ampere-turns will become equal, thereby suppressing the field distortion. Even when the dc voltage Edc is applied to the primary winding of the transformer maintaining the polarity as shown in Fig. 1d, the dc voltage Eco of the polarity opposite to that of Fig. 1a is generated on the converter input voltage $e_c$, and the direct current is supplied into the secondary winding such that the dc ampere-turns will become equal thereby suppressing the field distortion.

As described above, field distortion of the transformer is actively eliminated and, hence, increasing of the secondary current due to the field distortion generation of harmonic wave components of lower orders due to increase in the exciting current and noise are suppressed.

Brief Description of the Drawings

Fig. 1 is a diagram explaining a principal arrangement and its functions according to an embodiment of the present invention;

Fig. 2 is a diagram explaining the method of suppressing the field distortion;

Fig. 3 is a diagram showing a relationship between the field distortion current and the compensation current;

Fig. 4 illustrates an example in which the present invention is adapted to a power converter using a single phase ac power source;

Fig. 5 is a diagram for explaining the circuit operation of Fig. 1;

Figs. 6 to 8 are diagrams illustrating other embodiments;

Fig. 9 is a diagram illustrating the operation of the embodiment of Fig. 7; and

Fig. 10 is a diagram of constitution for compensating the field distortion equipped with a plurality of converters.

Detail Description of the Preferred Embodiments

An embodiment of the present invention will now be described in conjunction with Fig. 4.

Fig. 4 illustrates an example in which the present invention is adapted to a power conversion system which uses a power source of a single-phase alternating current, and wherein symbol ACS denotes a single-phase ac power source, ZLIN denotes an impedance element of the line, TR denotes a transformer, ACL denotes an ac reactor, CON denotes a PWM converter which converts an alternating current into a direct current, FC denotes a filter capacitor for smoothing the direct current, and LOAD denotes a load device.

Symbol AVR denotes a voltage regulating circuit which forms an active current instruction $Ir^*$ of a converter input current $i_2$ (secondary current of the transformer TR) from the difference between a dc voltage instruction $Ed^*$ and a dc voltage Ed, ACR1 denotes an active current regulating circuit which forms a power source orthogonal component instruction $Eci^*$ of the converter input voltage $e_o$ from the difference between the active current instruction $Ir^*$ and an active component Ir in the converter input current $i_2$ detected by the current detecting circuit CDT, and symbol ACR2 denotes a reactive current regulating circuit which forms a power source in-phase component instruction $Ecr^*$ of the converter input voltage $e_o$ from the difference between a reactive component instruction $Ii^*$ in the converter input current $i_2$ and a reactive component Ii in the converter input current $i_2$ detected by the current detecting circuit CDT. Further, symbol MWG denotes a modulated wave generating circuit which forms a modulated wave signal ym for pulse-width modulation from the power source in-phase component instruction $Ecr^*$ of the converter input voltage $e_o$, power source orthogonal component instruction $Eci^*$ and a dc component instruction $Eco^*$ that will be mentioned later, and symbol PWM denotes a pulse-width modulation circuit which compares the modulated wave signal ym with a carrier signal yc and produces a gate signal for turning on or off the switching element that constitutes the PWM converter.

Symbol DT denotes as surrounded by a broken line a field distortion quantity detecting circuit which detects the state of field distortion of the transformer TR, and which consists of a dc component detecting circuit DCD1 for detecting a dc component $I_1qp$ in the primary current of the transformer, a gain adjusting circuit GAIN1 that converts the dc component $I_1qp$ in the primary current $i_1$ into a secondary current, and a dc component detecting circuit DCD2 which detects the dc component $I_2qp$ in the secondary current $i_2$. The field distortion quantity detecting circuit DT produces $\Delta Idc$ (difference between $I_1qp$ and $I_2qp$) that corresponds to the sum of dc ampere-turns. Symbol DCC1 denotes a compensation circuit that forms a dc component instruction $E_{co}^*$ of the converter input voltage $e_o$ from the $\Delta Idc$.

Opening of the embodiment will now be described in conjunction with Figs. 4 and 5a through 5d.

In Fig. 4, the power source (primary voltage $e_1$ of the transformer) is supplied to the primary winding of the transformer TR via an impedance ZLIN (Lf: inductance of the line, Rf: resistance of the line) of the line from the power source ACS. The transformer TR transforms it and produces a secondary voltage $e_2$ adapted to the converter, and supplies it to the PWM converter CON via the ac reactor ACL. The PWM converter CON regulates the phase and amplitude of the ac side input voltage (converter input voltage) $e_o$ to supply a predetermined electric power maintaining a unity power factor. The amplitude and phase of $e_o$ are adjusted as described below.

The voltage regulating circuit AVR regulates the active component instruction $Ir^*$ in the converter input current $i_2$ so that the deviation becomes zero between the dc voltage instruction $Ed^*$ and the dc voltage Ed. This regulation set the active component instruction $Ir^*$ necessary for supplying a predetermined electric power. The current orthogonal component instruction Eci* of the converter input voltage $e_o$ is so adjusted by the active current regulating circuit ACR1 that the deviation becomes zero between the active component instruction Ir* and the active component Ir in the converter input current $i_2$ detected by the current detecting circuit CDT.

The reactive current instruction Ii* corresponds to a power factor instruction and is usually set to Ii*=0 (zero reactive current) such that the power factor is usually 1. Therefore, the reactive current regulating circuit ACR2 regulates the power source in-phase component instruction Ecr* of the converter input voltage $e_o$.

Based on these instruction values Eci* and Ecr*, the modulated wave generating circuit MWG produces a modulated wave signal ym of a sinusoidal wave having a predetermined amplitude and a phase relative to the secondary voltage $e_2$ of the transformer as shown in Fig. 5(a). The pulse-width modulating circuit PWM compares the modulated wave signal ym with a carrier signal yc of a triangular waveform, and renders the switching elements of the arms depending upon their magnitudes to be:

when ym > yc,      upper arm is on,
                           lower arm is off,
and
when ym < yc,      upper arm is off,
                           lower arm is on,

and produces a gate signal depending thereupon. Thus, the PWM converter is operated on a predetermined electric power maintaining a dc voltage and a unity power factor.

Let it now be presumed the case where a load device exists that provides a direct current to the primary side of the transformer TR. As the voltage drops due to the resistance Rf of the line, a dc voltage is applied to the primary winding of the transformer. Then, as the field distortion generates, the field distortion quantity detecting circuit DT detects the dc component $I_1$ qp in the primary current of the transformer through the dc component detecting circuit DCD1. The gain regulating circuit GAINI then converts the ampere-turns of the dc component $I_1$ qp into a secondary current, and produces a difference $\Delta$Idc (deviation in the compensation current) between the output $I_2$dc* and the dc component $I_2$dc in the secondary current produced from the dc component detecting circuit DCD2. The compensation circuit DCC1 includes an integration element, and adjusts the dc component instruction Eco* of the converter input voltage such that the output $\Delta$Idc of the field distortion quantity detecting circuit will become zero and such that the output $\Delta$Idc is maintained to be zero after it has become zero, and sends the instruction to the modulated wave generating circuit MWG. Referring to Fig. 5(b), the modulated wave generating circuit MWG shifts the modulated wave signal ym by Ymc in response to the dc component instruction Eco* and sends it to the pulse-width modulation circuit PWM which compares the modulated wave signal ym with the carrier signal yc, and produces a gate signal. As a result, the PWM converter generates a converter input terminal voltage that contains a dc voltage as shown in Fig. 5(b), and controls the direct current that flows into the transformer so as to cancel the field distortion. The dc component in the converter input voltage is regulated independently of the regulation of the ac component, without almost affecting the operation on a unity power factor.

As described above, the field distortion compensation control is effected for the transformer to eliminate the field distortion, and whereby the converter input current is suppressed from increasing and the exciting current is suppressed from increasing, too. Furthermore, since the PWM converter directly compensates the field distortion, there is no need to provide the transformer with a new winding for compensation or a transformer for compensation. Therefore, a compact apparatus is realized.

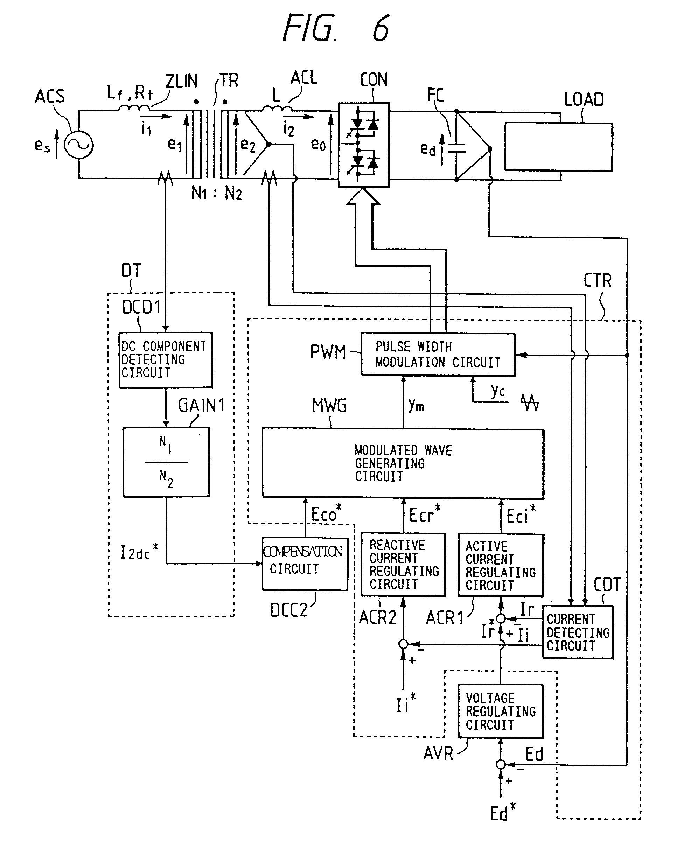

Here, when a relationship is obvious between the dc component Eco of the converter input voltage $e_o$ and the dc component $I_2$dc (compensation current) in the secondary current, the dc component detecting circuit DCD2 of Fig. 4 can be omitted, and the dc component in the primary current only may be detected to eliminate the field distortion as shown in Fig. 6. In Fig. 6, the field distortion quantity detecting circuit DT is constituted by a dc component detecting circuit DCD1 that detects the dc component in the primary current and a gain regulating circuit GAIN1 for regulating the gain of the output thereof. DCC2 forms a dc component instruction Eco* of the converter input voltage $e_o$ necessary for flowing the compensation current $I_2$dc in response to the output of the field distortion quantity detecting circuit DT. The constitution and operation in other respects are the same as those of Fig. 4.

According to this embodiment, the field distortion can be eliminated by using a detector circuit and a compensation circuit which are constructed very simply.

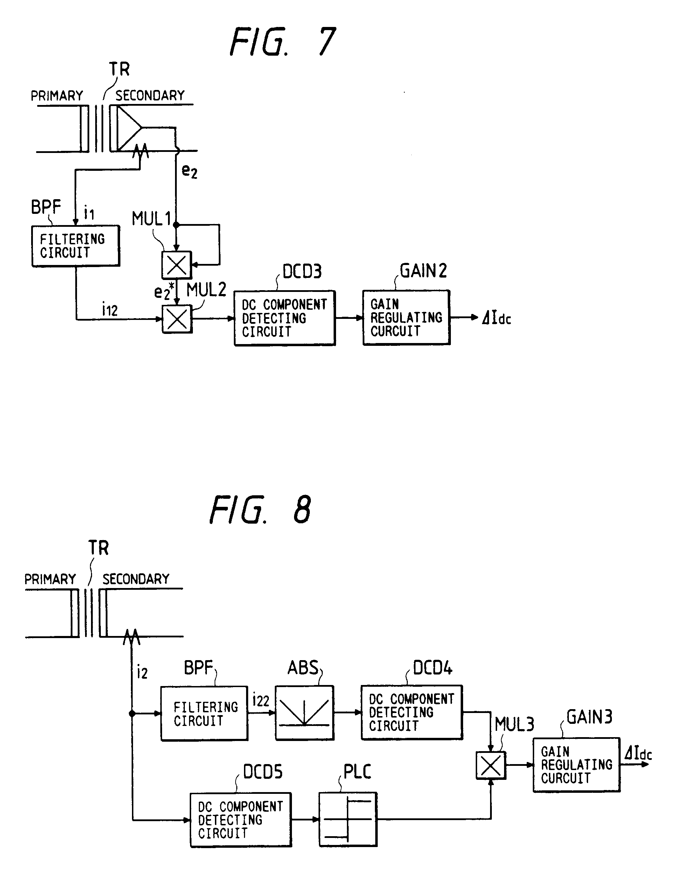

On the other hand, the field distortion quantity detecting circuit DT shown in Fig. 4 can also be realized by detecting even harmonic wave components (Fig. 7 shows the case of the second harmonic wave component) contained in the primary current or in the secondary current as shown in Fig. 7.

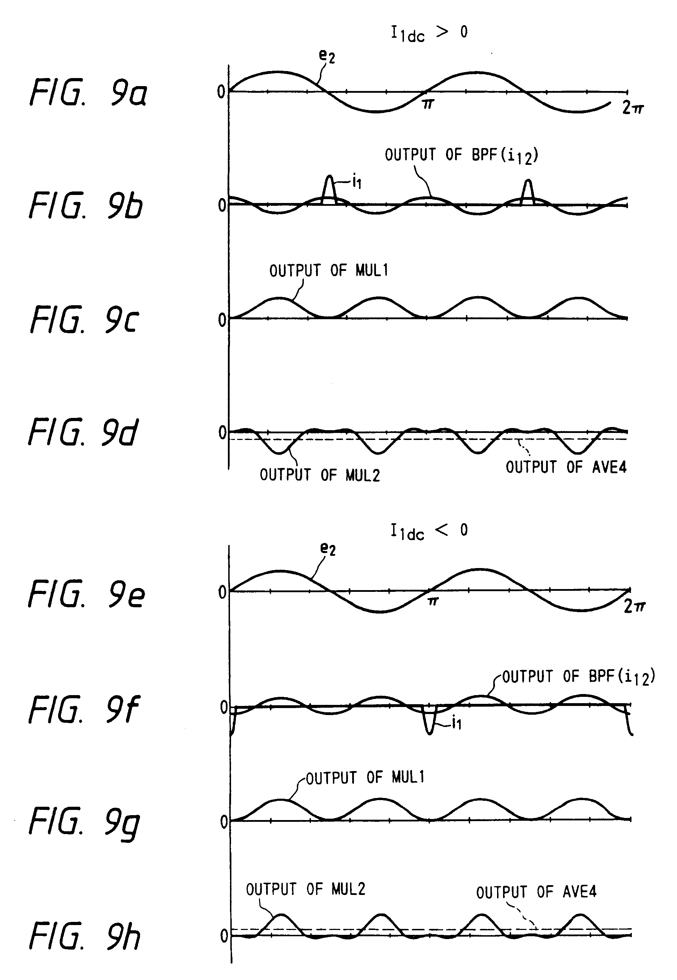

In Fig. 7, symbol BPF denotes a filtering circuit for detecting the second harmonic wave components, MUL1 and MUL2 denote multipliers, DCD3 denotes a dc component detecting circuit, and GAIN2 denotes a gain regulating circuit. Fig. 7 illustrates only the field distortion quantity detecting circuit DT surrounded by a broken line in Fig. 4, and the circuit constitution and the circuit operation in other respects are the same as those of Fig. 4. Operation of the field distortion quantity detecting circuit according to this embodiment will now be described in conjunction with Fig. 9 which shows operation waveforms when the field distortion current is positive and negative (no load). The filtering circuit BPF of Fig. 7 detects the second harmonic wave component $i_{12}$ contained in the secondary current $i_2$ as shown in Fig. 9(b). The second harmonic wave component $i_{12}$ is multiplied through the multiplier MUL2 by a signal of Fig. 9(c) that is obtained by multiplying the secondary voltage $e_2$ (or the primary voltage) of the transformer of Fig. 9(a) by itself through the multiplier MUL1, in order to form a signal shown in Fig. 9(d). The dc component (average value) contained therein is detected by the dc component detecting circuit DCD3. Furthermore, the sign is inverted by a gain regulating circuit GAIN2 to regulate the gain, and deviation $\Delta Idc$ in the compensation current is obtained. The deviation $\Delta Idc$ is a signal that corresponds to the output of the field distortion quantity detecting circuit DT of Fig. 4.

In this embodiment, the state of field distortion of the transformer is detected on the basis of second harmonic wave component which has a level greater than that of the dc components, and the response is quick. Therefore, the field distortion can be detected maintaining precision. The embodiment is effective particularly when the transformer contains the core that is designed to have a high magnetic flux density. Further, the apparatus is not affected by the erroneous setting of constants, and the secondary current is detected instead of the primary current. Therefore, there is no need to provide a current detector on the primary side that usually has a high voltage.

Fig. 8 shows an embodiment employing another field distortion detecting means, and wherein only the field distortion quantity detecting circuit is illustrated. The circuit constitution and operation in other respects are the same as those of Fig. 4.

In this embodiment, the second harmonic wave component contained in the secondary current is detected through the filter circuit BPF and is averaged through the dc component detecting circuit DCD4 to detect a field distortion quantity after the absolute value is removed by the absolute value circuit ABS. On the other hand, the dc component contained in the secondary current is detected by the dc component detecting circuit DCD5, and the polarity in the field distortion is detected by a polarity determining circuit PLC. These outputs are multiplied by each other through the multiplier MUL3, and the gain is regulated by the gain regulating circuit GAIN3 in order to obtain a deviation $\Delta Idc$ in the compensation current.

According to this embodiment, the quantity of field distortion is detected in terms of the second harmonic wave component at a high speed and in good precision. Furthermore, the polarity of field distortion is detected on the basis of the polarity of dc components without affected by the phase characteristics of the filtering circuit BPF. Therefore, no voltage signal is required that serves as a reference for determining the polarity, and the number of the multipliers can be decreased.

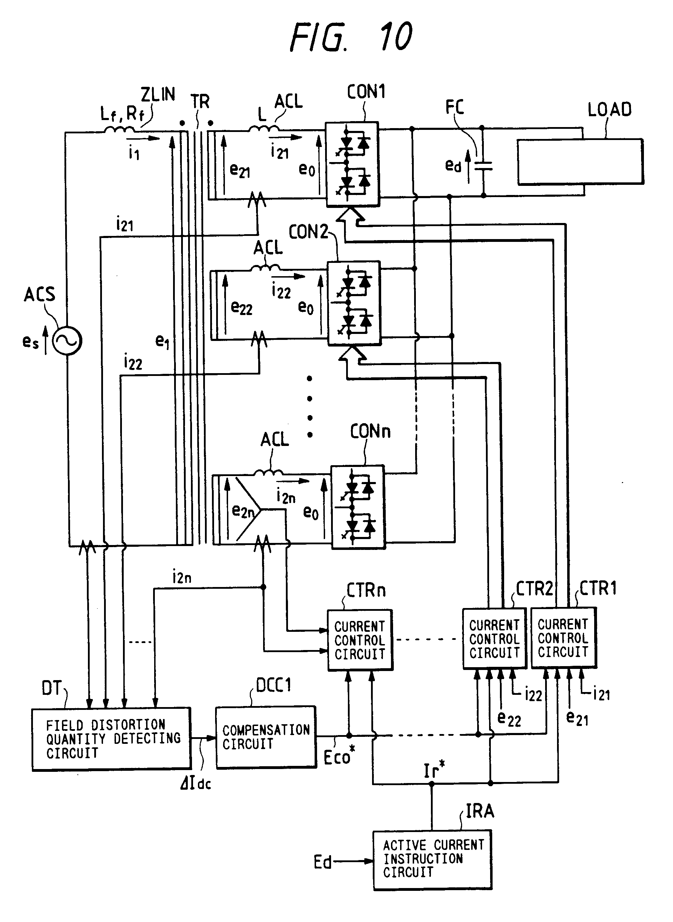

Fig. 10 illustrates a multiplexed case in which a plurality of converters are operated in parallel being connected to a transformer TR. Explained here is the case where there is a single load. However, the converters may have their own load. In Fig. 10, furthermore, the portions same as shows of Fig. 4 are represented in a simplified manner to simplify the drawing. The transformer TR has n secondary windings to which are connected n PWM converters CON1 to CONn. Symbols CTR1 to CTRn denote current control circuits that control converter input currents depending upon the output of the active current instruction circuit IRA, and that are constituted in the same manner as those of Fig. 4. Symbol DT denotes a field distortion quantity detecting circuit which detects currents of the windings of the transformer and calculates the sum of dc ampere-turns, and which is constituted in the same manner as that of Fig. 4.

The field distortion quantity detecting circuit DT detects dc components from the currents of windings of the transformer TR, calculates the sum $\Delta Idc$ of dc ampere-turns, and produces it. Depending upon this output, the compensation circuit DCC1 compensates the integration so that Idc becomes zero, forms a dc component instruction $Eco^*$ of the converter input voltage, and inputs it to the current control circuits CTR1 to CTRn. As a result, the dc compensation current flows to the converters CON1 to CONn being divided into 1/n, such that the field distortion is eliminated.

According to this embodiment, the dc current for compensating the field distortion is shared by the PWM converters. Therefore, the dc current is increased little by the compensation current of the converter input current, and the main circuit elements need have decreased current capacities. This embodiment is further effective in suppressing the dc voltage pulsation generated by the dc components in the converter input current.

According to the present invention, not only the field distortion of the transformer induced from the side of the transformer is eliminated but also the field distortion of the transformer due to the power source side is eliminated. Namely, the invention effectively operates against the continuous field distortion and prevents it in advance, suppressing the decrease of reactance that stems from the field distortion and variance in the secondary voltage of the transformer. Therefore, the converter input current (secondary current of the transformer) is suppressed from being locally increased, and the switching elements in the main circuit are protected from over-currents. It is further possible to remove low-order harmonic wave components that are generated together with the increase in the exciting current, as well as to decrease noise of the transformer that increases conspicuously due to field distortion. Furthermore, since the existing parts of the power converter can be utilized, reduced number of parts need be newly added.

**Claims**

1. A power converter comprising:
   a transformer (TR) for converting an AC voltage ($e_1$) into a predetermined AC voltage ($e_2$);
   a PWM-converter (CON) including switching elements and connected to the secondary side of the transformer to convert an alternating current ($i_2$) into a direct current;
   a load device (LOAD) connected to the dc side of said PWM-converter (CON);
   control means (CTR) which turns on and off the switching elements that constitute said PWM-converter (CON);
   **characterized** in further comprising;
   means (DT) for detecting a quantity of state related to the field distortion of said transformer (TR) by means of at least one of detecting the total dc ampere-turns of said transformer (TR), detecting even harmonic wave components contained in the secondary current ($i_2$) or primary current ($i_1$), or detecting the dc component contained in the primary current of said transformer (TR); and
   means (DCC1, DCC2) for inputting the detected value to said control means (CTR) such that a dc component corresponding to the detected value is generated on the ac side of said PWM-converter (CON).

2. A power converter according to claim 1,
   characterized in that
   the transformer (TR) comprises a plurality of secondary windings; the power converter further comprising a plurality of PWM-converters (CON1, ...., CONn) including switching elements which are connected to said plurality of secondary windings to convert an alternating current into a direct current;
   a plurality of load devices (LOAD) being connected to the dc output terminals of said converters;
   the means (DT) detecting the quantity of a state by means of at least one of detecting the total dc ampere-turns of said transformer (TR), detecting even harmonic wave components contained in the secondary current ($i_{21},....,i_{2n}$) or primary current ($i_1$), and detecting the dc component contained in the primary current ($i_1$) of said transformer (TR); and
   the inputting means (DCC1) supplying the detected value according to the quantity of the state according to the field distortion of the transformer to said control means (CTR1,...,CTRn) such that dc components corresponding to compensation values are generated on the ac sides of said plurality of PWM-converters (CON1,....,CONn) (Fig. 10).

3. A power converter according to claim 1 or 2, wherein said detecting means (DT) detects the magnitude of the field distortion in terms of amplitudes of the even harmonic wave components contained in the primary current ($i_1$) or the secondary current ($i_2$), and detects the polarity of the field distortion in terms of dc components contained in the primary current ($i_1$) or the secondary current ($i_2$).

4. A power converter comprising:
   a transformer (TR) which converts an ac power source voltage ($e_1$) into a predetermined ac voltage ($e_2$);
   a PWM-converter (CON) including switching elements which is connected to the secondary side of the transformer (TR) to convert an ac current ($i_2$) into a direct current;
   a load device (LOAD) connected to the dc side of the PWM-converter (CON);
   an active current instruction preparation means (IRA) for forming an active current instruction value of a current that is input to said PWM-converter (CON).
   a power factor instruction means for instructing the power factor of said converter;

8

characterized by

means (DT) for detecting the quantity of state related to the field distortion of said transformer (TR) by means of at least one of detecting the total dc ampere-turns of said transformer (TR), detecting even harmonic wave components contained in the secondary current ($i_2$) or primary current ($i_1$), and detecting the dc component contained in the primary current ($i_1$) of said transformer (TR).

dc component instruction means (DCC1) for instructing a dc component (Eco*) that will be produced onto the ac side by said PWM-converter depending upon the detected value of said means that detects the quantity of state; and

control means (CTR) which receives the output of said active current instruction preparation means (IRA), the output of said power factor instruction means and the output of said dc component instruction means (DCC1), in order to turn on and off the switching elements that constitute said PWM-converter (CON) dependent upon these outputs.

## Patentansprüche

1.  Stromrichter mit:

    einem Transformator (TR) zur Umwandlung einer Wechselspannung ($e_1$) in eine vorbestimmte Wechselspannung ($e_2$);

    einem Pulsbreitenmodulations-Wandler (CON), der Schaltelemente enthält und mit der Sekundärseite des Transformators zur Umwandlung eines Wechselstroms ($i_2$) in einen Gleichstrom verbunden ist;

    einer mit der Gleichstromseite des Pulsbreitenmodulationswandlers (CON) verbundenen Lasteinrichtung (LOAD);

    einer Steuereinrichtung (CTR), welche die den Pulsbreitenmodulationswandler (CON) bildenden Schaltelemente ein- und ausschaltet;

    gekennzeichnet durch

    eine Einrichtung (DT) zur Erfassung einer auf die Feldverzerrung des Transformators (TR) bezogenen Zustandsgröße durch Erfassung mindestens einer der Größen, nämlich der gesamten Gleichstrom-Ampère-Windungen des Transformators (TR), der geradzahligen harmonischen Schwingungskomponenten in dem Sekundärstrom ($i_2$) oder dem Primärstrom ($i_1$), oder der Gleichstromkomponente in dem Primärstrom des Transformators (TR); und

    eine Einrichtung (DCC1, DCC2) für die Eingabe des erfaßten Werts in die Steuereinrichtung (CTR) derart, daß auf der Wechselstromseite des Pulsbreitenmodulations-Wandlers (CON) eine Gleichstromkomponente entsprechend dem erfaßten Wert erzeugt wird.

2.  Stromrichter nach Anspruch 1,

    dadurch gekennzeichnet,

    daß der Transformator (TR) mehrere Sekundärwicklungen umfaßt;

    wobei der Stromrichter ferner mehrere Pulsreitenmodulations-Wandler (CON1, ..., CONn) mit Schaltelementen umfaßt, die mit den mehreren Sekundärwicklungen zur Umwandlung eines Wechselstroms in einen Gleichstrom verbunden sind;

    wobei mehrere Lasteinrichtungen (LOAD) mit den Gleichstromausgangsanschlüssen der Wandler verbunden sind;

    wobei die Einrichtung (DT) die Zustandsgröße durch Erfassung mindestens einer der Größen, nämlich der gesamten Gleichstrom-Ampère-Windungen des Transformators (TR), der geradzahligen harmonischen Schwingungskomponenten in dem Sekundärstrom ($i_{21}$, ..., $i_{2n}$) oder dem Primärstrom ($i_1$), und der Gleichstromkomponente in dem Primärstrom ($i_1$) des Transformators (TR) erfaßt; und

    wobei die Eingabeeinrichtung (DCC1) den erfaßten Wert der auf die Feldverzerrung des Transformators bezogenen Zustandsgröße der Steuereinrichtung (CTR1, ..., CTRn) derart zuführt, daß auf den Wechselstromseiten der mehreren Pulsbreitenmodulations-Wandler (CON1, ..., CONn) Kompensationswerten entsprechende Gleichstromkomponenten erzeugt werden (Fig. 10).

3.  Stromrichter nach Anspruch 1 oder 2,

    dadurch gekennzeichnet,

    daß die Erfassungseinrichtung (DT) die Größe der Feldverzerrung anhand von Amplituden der geradzahligen harmonischen Schwingungskomponenten in den Primärstrom ($i_1$) oder den Sekundärstrom und die Polarität der Feldverzerrung anhand von Gleichstromkomponenten in den Primärstrom ($i_1$) oder den Sekundärstrom ($i_2$) erfaßt.

**4.** Stromrichter mit:

einem Transformator (TR), der eine Wechselspannung (e$_1$) in eine vorbestimmte Wechselspannung (e$_2$) umwandelt;

einem Pulsbreitenmodulations-Wandler (CON) mit Schaltelementen, der mit der Sekundärseite des Transformators (TR) zur Umwandlung eines Wechselstroms (i$_2$) in einen Gleichstrom verbunden ist;

einer mit der Gleichstromseite des Pulsbreitenmodulations-Wandlers (CON) verbundenen Lasteinrichtung (LOAD);

einer Vorbereitungseinrichtung (IRA) für die Vorgabe eines Wirkstroms zur Erzeugung eines Wirkstrom-Vorgabewertes eines Stroms, der in den Pulsbreitenmodulations-Wandler (CON) eingespeist wird,

einer Leistungsfaktorvorgabeeinrichtung zur Vorgabe des Leistungsfaktors des Wandlers;

gekennzeichnet durch

eine Einrichtung (DT) zur Erfassung einer auf die Feldverzerrung des Transformators (TR) bezogenen Zustandsgröße durch Erfassung mindestens einer der folgenden Größen, nämlich der gesamten Gleichstrom-Ampère-Windungen des Transformators (TR), zur Erfassung der geradzahligen harmonischen Schwingungskomponenten in dem Sekundärstrom (i$_2$) oder dem Primärstrom (i$_1$), und Erfassung der Gleichstromkomponente in dem Primärstrom (i$_1$) des Transformators (TR);

eine Gleichstromkomponenten-Vorgabeeinrichtung (DCC1) zur Vorgabe einer Gleichstromkomponente (Eco*), die auf der Gleichstromseite durch den Pulsbreitenmodulations-Wandler in Abhängigkeit von dem erfaßten Wert derjenigen Einrichtung produziert wird, welche die Zustandsgröße erfaßt; und

eine Steuereinrichtung (CTR), welche die Ausgangsgrößen der Vorbereitungseinrichtung (IRA) für die Vorgabe eines Wirkstroms, die Ausgangsgröße der Leistungsfaktor-Vorgabeeinrichtung und die Ausgangsgröße der Gleichstromkomponenten-Vorgabeeinrichtung (DCC1) aufnimmt, um die Schaltelemente, die den Pulsbreitenmodulations-Wandler (CON) bilden, in Abhängigkeit von diesen Ausgangswerten an- und ausschalten.

## Revendications

**1.** Convertisseur de puissance comportant :

un transformateur (TR) pour convertir une tension alternative (e$_1$) en une tension alternative prédéterminée (e$_2$) ;

un convertisseur MID CON) comprenant des éléments de commutation et relié au côté secondaire du transformateur pour convertir un courant alternatif (i$_2$) en un courant continu ;

un dispositif de charge (CHARGE) relié au côté continu dudit convertisseur MID (CON) ;

des moyens de commande (CTR) qui font conduire et coupent les éléments de commutation qui constituent ledit convertisseur MID (CON) ;

caractérisé en ce qu'il comporte en outre :

des moyens (DT) pour détecter une grandeur d'état liée à la distorsion de champ dudit transformateur (TR) au moyen d'au moins l'une parmi la détection des ampèrestours continus totaux dudit transformateur (TR), la détection des composantes d'onde harmonique paire contenues dans le courant secondaire (i$_2$) ou le courant primaire (i$_1$), ou la détection de la composante continue contenue dans le courant primaire dudit transformateur (TR) ; et

des moyens (DCC1, DCC2) pour appliquer la valeur détectée auxdits moyens de commande (CTR), de telle sorte qu'une composante continue correspondant à la valeur détectée est générée sur le côté alternatif dudit convertisseur MID (CON).

**2.** Convertisseur de puissance selon la revendication 1, caractérisé en ce que

le transformateur (TR) comporte une pluralité d'enroulements secondaires ; le convertisseur de puissance comportant en outre une pluralité de convertisseurs MID (CON1, ..., CONn) comprenant des éléments de commutation qui sont reliés à ladite pluralité d'enroulements secondaires pour convertir un courant alternatif en un courant continu ;

une pluralité de dispositifs de charge (CHARGE) étant reliés aux bornes de sortie continues desdits convertisseurs ;

les moyens (DT) détectant la grandeur d'un état au moyen d'au moins l'une parmi la détection des ampèrestours continus totaux dudit transformateur (TR), la détection des composantes d'onde harmonique paire contenues dans le courant secondaire (i$_{21}$, ..., i$_{2n}$) ou dans le courant primaire (i$_1$), et la détection de la composante continue contenue dans le courant primaire (i$_1$) dudit transformateur (TR) ; et

les moyens d'application (DCC1) appliquant la valeur détectée selon la grandeur de l'état correspondant à la distorsion de champ du transformateur auxdits moyens de commande (CTR1, ..., CTRn), de telle sorte que des composantes continues correspondant à des valeurs de compensation sont générées sur les côtés alternatifs de ladite pluralité de convertisseurs MID (CON1, ..., CONn) (Figure 10).

**3.** Convertisseur de puissance selon la revendication 1 ou 2, dans lequel lesdits moyens de détection (DT) détectent l'amplitude de la distorsion de champ en fonction d'amplitudes des composantes d'onde harmonique paire contenues dans le courant primaire ($i_1$) ou le courant secondaire ($i_2$), et détectent la polarité de la distorsion de champ en fonction des composantes continues contenues dans le courant primaire ($i_1$) ou le courant secondaire ($i_2$).

**4.** Convertisseur de puissance comportant :

un transformateur (TR) qui convertit une tension de source de puissance alternative ($e_1$) en une tension alternative prédéterminée ($e_2$) ;

un convertisseur MID (CON) comprenant des éléments de commutation qui est relié au côté secondaire du transformateur (TR) pour convertir un courant alternatif ($i_2$) en un courant continu ;

un dispositif de charge (CHARGE) relié au côté continu du convertisseur MID (CON) ;

un moyen de préparation d'instruction de courant actif (IRA) pour former une valeur d'instruction de courant actif d'un courant qui est appliqué audit convertisseur MID (CON) ;

un moyen d'instruction de facteur de puissance pour instruire le facteur de puissance dudit convertisseur; caractérisé par

des moyens (DT) pour détecter la grandeur d'état liée à la distorsion de champ dudit transformateur (TR) au moyen d'au moins l'une parmi la détection des ampèrestours continus totaux dudit transformateur (TR), la détection des composantes d'onde harmonique paire contenues dans le courant secondaire ($i_2$) ou le courant primaire ($i_1$), et la détection de la composante continue contenue dans le courant primaire ($i_1$) dudit transformateur (TR);

des moyens d'instruction de composante continue (DCC1) pour instruire une composante continue (Eco*) qui sera produite sur le côté alternatif par ledit convertisseur MID en fonction de la valeur détectée desdits moyens qui détectent la grandeur d'état ; et

des moyens de commande (CTR) qui reçoivent le signal de sortie desdits moyens de préparation d'instruction de courant actif (IRA), le signal de sortie desdits moyens d'instruction du facteur de puissance et le signal de sortie desdits moyens d'instruction de composante continue (DCC1), afin de faire conduire et de couper les éléments de commutation qui constituent ledit convertisseur MID (CON) en fonction de ces signaux de sortie.

## FIG. 1a

CON

$e_s$ $E_{dc}$ $i_1$ $i_2$ $e_c$ $E_{co}$

## FIG. 1d

CON

$e_s$ $E_{dc}$ $i_1$ $i_2$ $e_c$ $E_{co}$

## FIG. 1b

PRIMARY VOLTAGE
OF TRANSFORMER

0

## FIG. 1e

PRIMARY VOLTAGE
OF TRANSFORMER

0

## FIG. 1c

EXCITING CURRENT

0

## FIG. 1f

0

EXCITING CURRENT

## FIG. 2

COMPENSATION CURRENT $I_{2dc}$

FIELD DISTORTION
CURRENT $I_{1dc}$

0

SLOPE $- N_1 / N_2$

# FIG. 3

EACH COMPONENT OF PRIMARY CURRENT →

FUNDAMENTAL WAVE COMPONENT

SECOND HARMONIC WAVE COMPONENT

0

FIELD DISTORTION CURRENT $I_{1dc}$ →

# FIG. 5a

$y_m$   $y_c$

MODULATED WAVE AND CARRIER

# FIG. 5c

$y_m$   $y_c$

$Y_{mc}$

# FIG. 5b

FUNDAMENTAL COMPONENT

INPUT TERMINAL VOLTAGE OF CONVERTER

(a) NORMAL

# FIG. 5d

FUNDAMENTAL COMPONENT

DIRECT CURRENT COMPONENT

(b) FIELD DISTORTION

# FIG. 4

# FIG. 6

# FIG. 7

# FIG. 8

EP 0 370 388 B1

$I_{1dc} > 0$

FIG. 9a

FIG. 9b

FIG. 9c

FIG. 9d

$I_{1dc} < 0$

FIG. 9e

FIG. 9f

FIG. 9g

FIG. 9h

17

# FIG. 10